# EUROPEAN PATENT SPECIFICATION

(11) **EP 1 446 584 B1**
(45) Date of publication and mention of the grant of the patent: **18.07.2007**
(21) Application number: 02789755.2
(22) Date of filing: 19.11.2002
(51) Int. Cl.: H03M 9/00, G06F 13/00

(54) **BASE STATION HAVING A HYBRID PARALLEL/SERIAL BUS INTERFACE**
BASISSTATION MIT EINER HYBRIDEN PARALLELEN/SERIELLEN BUSSCHNITTSTELLE
STATION DE BASE DOTEE D'UNE INTERFACE DE BUS HYBRIDE SERIELLE/PARALLELE

(30) Priority: 21.11.2001 US 990060; 22.02.2002 US 81466
(43) Date of publication of application: 18.08.2004
(73) Proprietor: INTERDIGITAL TECHNOLOGY CORPORATION, Wilmington, DE 19810 (US)
(72) Inventor: GREDONE, Joseph, Chalfont, PA 18914 (US); STUFFLET, Alfred, Plymouth Meeting, PA 19462 (US); AXNESS, Timothy, A., Collegeville, PA 19426 (US)
(74) Representative: Henningsson, Gunnar
(86) International application number: PCT/US2002/037150
(87) International publication number: WO 2003/046391

(56) References cited:
- US-A- 5 602 780
- US-A- 6 122 683
- "DS90CR211/DS90CR212 21-Bit Channel Link" July 1997 (1997-07), NATIONAL SEMICONDUCTOR , SANTA CLARA, CALIFORNIA, USA , XP002306540 Retrieved from the Internet: URL:http://www.national.com/ds/DS/DS90CR21 1.pdf> * pages 1-2; figure 13 *
- NOVAK T ET AL: "Channel Link - Moving and Shaping Information In Point-toPoint Applications" May 1996 (1996-05), NATIONAL SEMICONDUCTOR , SANTA CLARA, CALIFORNIA, USA , XP002306541 Retrieved from the Internet: URL:http://www.national.com/an/AN/AN-1041. pdf> * pages 1-2; figures 1-5 *
- VON HERZEN B ET AL: "Multi-Channel 622 Mb/s LVDS Data Transfer for Virtex-E Devices" 6 January 2001 (2001-01-06), XILINX INC. , SAN JOSE, CALIFORNIA, USA , XP002306542 Retrieved from the Internet: URL:http://direct.xilinx.com/bvdocs/appnot es/xapp233.pdf> * pages 1-5; figures 1-3,6 *
- KITANOWSKA S ET AL: "Bus LVDS with Virtex-E Devices" 26 July 2000 (2000-07-26), XILINX INC , SAN JOSE, CALIFORNIA, USA , XP002307032 Retrieved from the Internet: URL:http://direct.xilinx.com/bvdocs/appnot es/xapp243.pdf> * page 1 *
- "LVDS System Data Framing" 18 December 2000 (2000-12-18), XILINX INC. , SAN JOSE, CALIFORNIA, USA , XP002317928 Retrieved from the Internet: URL:http://direct.xilinx.com/bvdocs/appnot es/xapp238.pdf> * page 1 *

## Description

**BACKGROUND**

The invention relates to bus data transfers. In particular, the invention relates to reducing the number of lines used to transfer bus data.

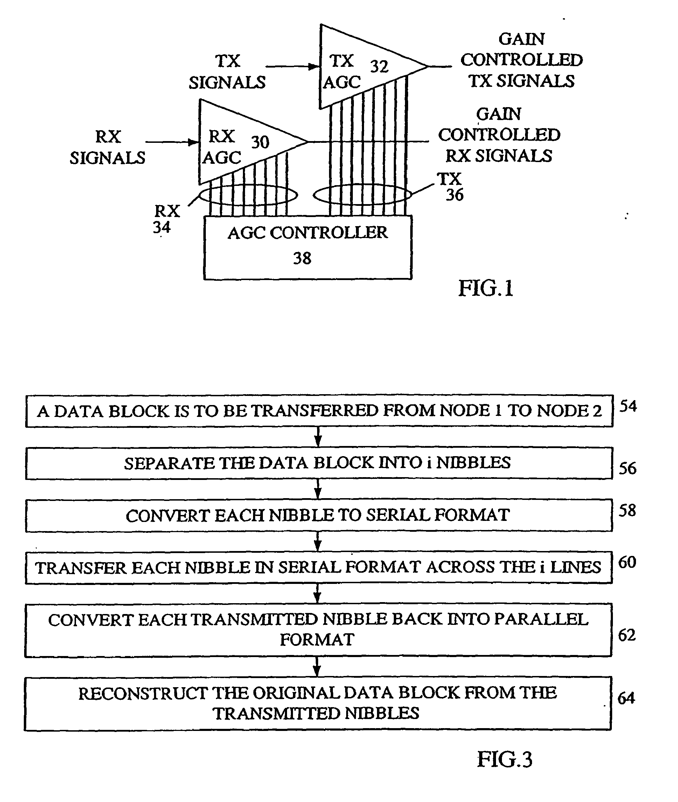

One example of a bus used to transfer data is shown in Figure 1. Figure 1 is an illustration of a receive and transmit gain controllers (GCs) 30, 32 and a GC controller 38 for use in a wireless communication system. A communication station, such as a base station or user equipment, transmits (TX) and receives (RX) signals. To control the gain of these signals, to be within the operating ranges of other reception/transmission components, the GCs 30, 32 adjust the gain on the RX and TX signals.

To control the gain parameters for the GCs 30, 32, a GC controller 38 is used. As shown in Figure 1, the GC controller 38 uses a power control bus, such as a sixteen line bus 34, 36, to send a gain value for the TX 36 and RX 34 signals, such as eight lines for each. Although the power control bus lines 34, 36 allow for a fast data transfer, it requires either many pins on the GCs 30, 32 and the GC controller 38 or many connections between the GCs 30, 32 and GC controller 38 on an integrated circuit (IC), such as an application specific IC (ASIC). Increasing the number of pins requires additional circuit board space and connections. Increasing IC connections uses valuable IC space. The large number of pins or connections may increase the cost of a bus depending on the implementation.

Accordingly, it is desirable to have other data transfer approaches.

"DS90CR211/DS90CR212 21-Bit Channel Link" National Semiconductor discloses a transmitter converting 21 bits of input data into three data streams, and a receiver converting the data streams back into 21 bits.

In Serielle Schnittstellentecknik und Protokollanalyser-Anwendungen : serielle Schnittstellen und deren Protokolle verstehen; aufbauen und testen" Drigalsky I discloses use of a start bit for asynchronous transfer.

"LVDS System Data Framing", Xilinx discloses that a control bit can be prefixed to a basic unit of data and that the control bit can distinguish between a data byte and a control word byte.

**SUMMARY**

The invention relates to a base station having a hybrid serial/parallel bus interface system as defined in independent claim 1.

**BRIEF DESCRIPTION OF THE DRAWING(S)**

Figure 1 is an illustration of an RX and TX GC and a GC controller.

Figure 2 is a block diagram of a hybrid parallel/serial bus interface.

Figure 3 is a flow chart for transferring data blocks using a hybrid parallel/serial bus interface.

Figure 4 illustrates demultiplexing a block into a most significant and least significant nibble.

Figure 5 illustrates demultiplexing a block using data interleaving.

Figure 6 is a block diagram of a bi-dixectional hybrid parallel/serial bus interface.

Figure 7 is a diagram of an implementation of one bi-directional line.

Figure 8 is a timing diagram illustrating start bits.

Figure 9 is a block diagram of a function controllable hybrid parallel/serial bus interface.

Figure 10 is a timing diagram of start bits for a function controllable hybrid parallel/serial bus interface.

Figure 11 is a table of an implementation of start bits indicating functions.

Figure 12 is a block diagram of a destination controlling hybrid parallel/serial bus interface.

Figure 13 is a table of an implementation of start bits indicating destinations.

Figure 14 is a table of an implementation of start bits indicating destinations/functions.

Figure 15 is a block diagram of a destinations/functions controlling hybrid parallel/serial bus interface.

Figure 16 is a flow chart for start bits indicating destinations/functions.

Figure 17 is a block diagram for a positive and negative clock edge hybrid parallel/serial bus interface.

Figure 18 is a timing diagram for a positive and negative clock edge hybrid parallel/serial bus interface.

Figure 19 is a block diagram of a 2-line GC/GC controller bus.

Figure 20 is a block diagram of a 3-line GC/GC controller bus.

**DETAILED DESCRIPTION OF THE PREFERRED EMBODIMENT(S)**

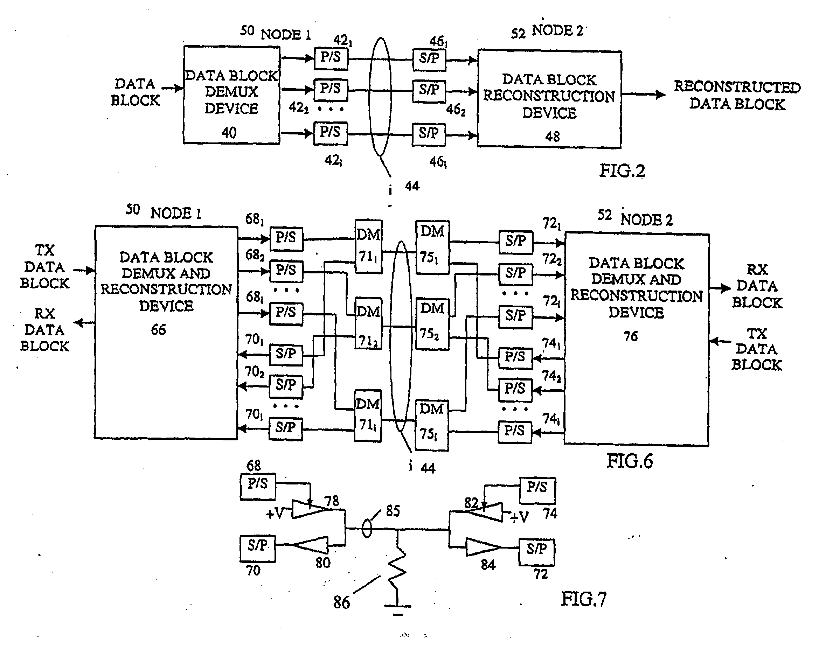

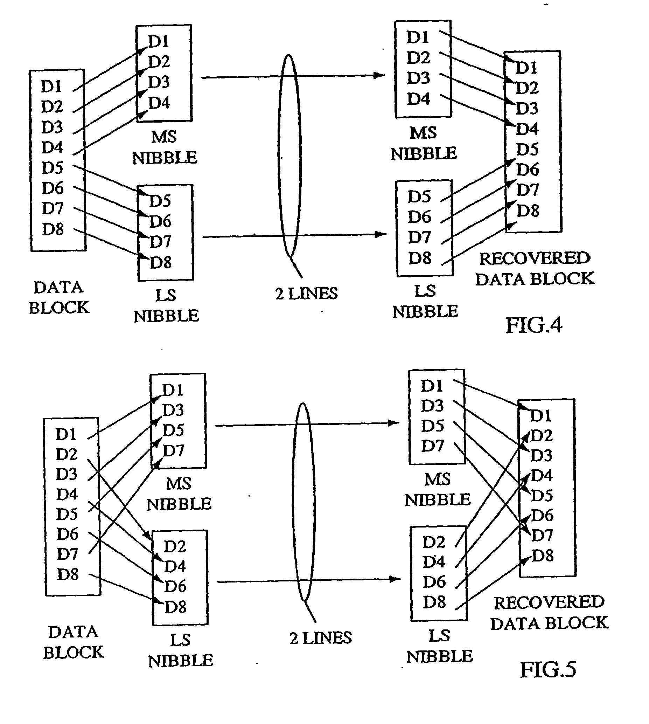

Figure 2 is a block diagram of a hybrid parallel/serial bus interface and Figure 3 is a flow chart of hybrid parallel/serial bus interface data transfer. A data block is to be transferred across the interface from node 1 50 to node 2 52. A data block demultiplexing device 40 receives the block and demultiplexes it into i nibbles for transfer over i data transfer lines 44, (56). The value for i is based on a tradeoff between number of connections and transfer speed. One approach to determine i is to first determine a maximum latency permitted to transfer the data block. Based on the allowed maximum latency, a minimum number of lines required to transfer the block is determined. Using the minimum number of lines, the lines used to transfer the data is selected to be at least the minimum. The lines 44 may be the pins and their associated connections on a circuit board or connections on an IC. One approach to demultiplex into nibbles divides the block into a most significant to a least significant nibble. To illustrate for an eight bit block transfer over two lines as shown in Figure 4, the block is demultiplexed into a four bit most significant nibble and a four bit least significant nibble.

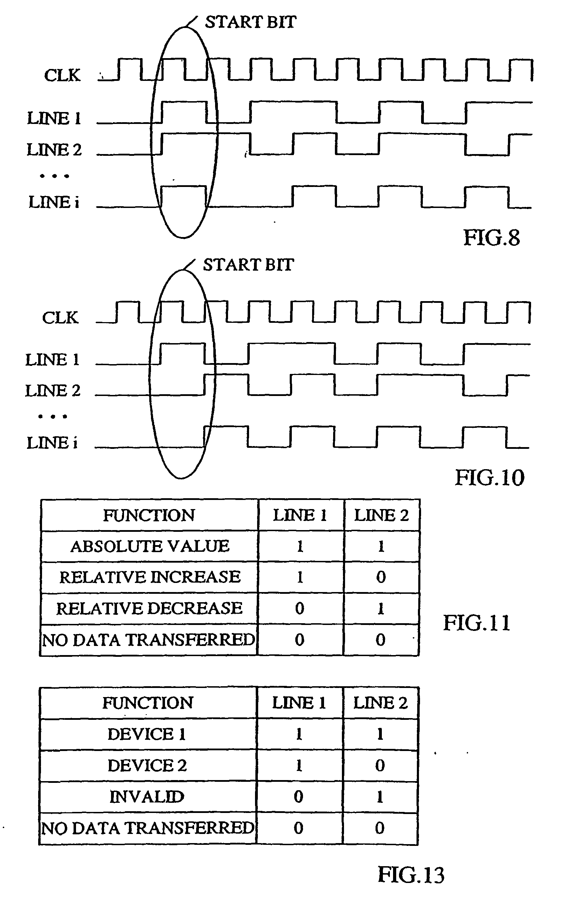

Another approach interleaves the block across the i nibbles. The first i bits of the block become the first bit in each nibble. The second i bits become the second bit in each nibble and so on until the last i bits. To illustrate for an eight bit block over two connections as shown in Figure 5, the first bit is mapped to the first bit of nibble one. The second bit is mapped to the first bit of nibble two. The third bit is mapped to the second bit of nibble one and so on until the last bit is mapped to the last bit of nibble two.

Each nibble is sent to a corresponding one of i parallel to serial (P/S) converters 42, (58), converted from parallel bits to serial bits, and transferred serially across its line, (60). On the opposing end of each line is a serial to parallel (S/P) converter 46. Each S/P converter 46 converts the transmitted serial data into its original nibble, (62). The i recovered nibbles are processed by a data block reconstruction device 48 to reconstruct the original data block, (64).

In another, bidirectional approach, the i connections are used to transfer data in both directions as shown in Figure 6. Information data may be transferred in both directions or information may be sent in one direction and an acknowledgment sent back in the other direction. A data block for transfer from node 150 to node 2 52 is received by the data block demultiplexing and reconstruction device 66. The demultiplexing and reconstruction device 66 demultiplexes the block into i nibbles. i P/S converters 68 convert each nibble into serial data. A set of multiplexers (MUXs)/DEMUXs 71 couples each P/S converter 68 to a corresponding one of the i lines 44. At node 2 52, another set of MUXs/DEMUXs 75 connects the lines 44 to a set of S/P converters 72. The S/P converters 72 convert the received serial data of each nibble into the originally transmitted nibbles. The received nibbles are reconstructed by a data block demultiplexing and reconstruction device 76 into the original data block and output as the received data block.

For blocks transferred from Node 2 52 to Node 1 50, a data block is received by the data block demultiplexing and reconstruction device 76. That block is demultiplexed into nibbles and the nibbles are sent to a set of P/S converters 74. The P/S converters 74 convert each nibble into serial format for transfer across the i lines 44. A Node 2 set of MUXs/DEMUXs 75 couples the P/S converters 74 to the i lines 44 and a Node 1 set of MUXs/DEMUXs 71 couples the lines 44 to i S/P converters 70. The S/P converters 70 convert the transmitted data into its original nibbles. The data block demultiplexing and reconstruction device 66 reconstructs the data block from the received nibbles to output the received data block. Since data is only sent in one direction at a time, this implementation operates in a half duplex mode.

Figure 7 is a simplified diagram of one implementation of bidirectional switching circuits. The serial output from the node 1 P/S converter 68 is input into a tri-statable buffer 78. The buffer 78 has another input coupled to a voltage representing a high state. The output of the buffer 78 is the serial data which is sent via the line 85 to a Node 2 tri-statable buffer 84. A resistor 86 is coupled between the line 85 and ground The Node 2 buffer 84 passes the serial data to a Node 2 S/P converter 72. Similarly, the serial output from the Node 2 P/S converter 74 is input into a tri-statable buffer 82. That buffer 82 also having another input coupled to a high voltage. The serial output of that buffer 82 is sent via the line 85 to a Node 1 tri-statable buffer 80. The Node 1 buffer 80 passes the serial data to a Node 1 S/P converter 70.

In another implementation, some of the i lines 44 may transfer data in one direction and the other i lines 44 transfer data in another direction. At Node 150, a data block is received for transmission to Node 2 52. Based on the data throughput rate required for the block and the traffic demand in the opposite direction, j, being a value from 1 to i, of the connections are used to transfer the block. The block is broken into j nibbles and converted to j sets of serial data using j of the i P/S converters 68. A corresponding number ofj Node 2 S/P converters 72 and the Node 2 data block separation and reconstruction device 76 recovers the data block. In the opposite direction, up to i-j or k lines are used to transfer block data.

In a preferred implementation of the bidirectional bus for use in a gain control bus, a gain control value is sent in one direction and an acknowledgment signal is sent back. Alternately, a gain control value is sent in one direction and a status of the gain control device in the other direction.

One implementation of the hybrid parallel/serial interface is in a synchronous system and is described in conjunction with Figure 8. A synchronous clock is used to synchronize the timing of the various components. To indicate the start of the data block transfer, a start bit is sent. As shown in Figure 8, each line is at its normal zero level. A start bit is sent indicating the beginning of the block transfer. In this example, all the lines send a start bit, although it is only necessary to send a start bit over one line. If a start bit, such as a one value, is sent over any line, the receiving node realizes that the block data transfer has begun. Each serial nibble is sent through its corresponding line. After transfer of the nibbles, the lines return to their normal state, such as all low.

In another implementation, the start bits are also used as an indicator of functions to be performed. An illustration of such an implementation is shown in Figure 9. As shown in Figure 10, if any of the connections's first bits are a one, the receiving node realizes block data is to be transferred. As shown in the table of Figure 11 for a GC controller implementation, three combinations of start bits are used, "01," "10" and "11." "00" indicates a start bit was not sent. Each combination represents a function. In this illustration, "01" " indicates that a relative decrease function should be performed, such as decreasing the data block value by 1. A "10" indicates that a relative increase function should be performed, such as increasing the data block value by 1. A "11" indicates an absolute value function, where the block maintains the same value. To increase the number of available functions, additional bits are used. For example, 2 starting bits per line are mapped to up to seven (7) functions or n starting bits for i lines are mapped up to iⁿ⁺¹ - 1 functions. The processing device 86 performs the function on the received data block as indicated by the starting bits.

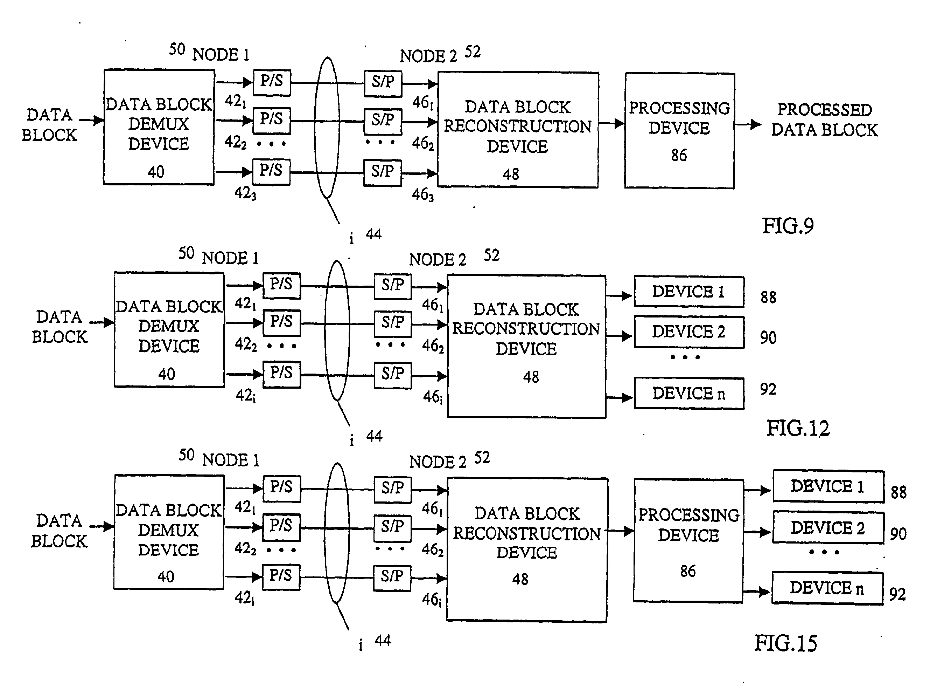

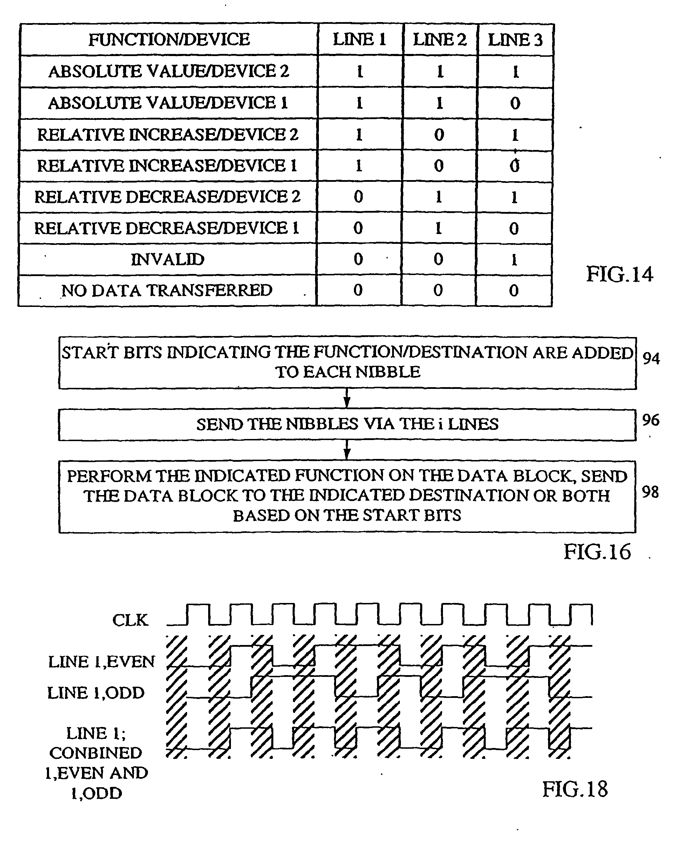

In another implementation as shown in Figure 12, the start bits indicate a destination device. As illustrated in Figure 13 for a two destination device/two line implementation, the combination of start bits relates to a destination device 88-92 for the transferred data block. A "01" represents device 1; a "10" represents device 2; and a "11" represents device 3. After receipt of the start bits of the data block reconstruction device 48, the reconstructed block is sent to the corresponding device 88-92. To increase the number of potential destination devices, additional start bits may be used. For n starting bits over each of i lines, up to iⁿ⁺¹ -1 devices are selected.

As illustrated in the table of Figure 14, the start bits may be used to represent both function and destination device. Figure 14 shows a three connection system having two devices, such as an RX and TX GC. Using the start bit for each line, three functions for two devices are shown. In this example, the start bit for line 3 represents the target device, a "0" representing target device 1 and a "1" representing target device 2. The bits for connections 2 and 3 represent the performed function. A "11" represents an absolute value function; a "10" represents a relative increase function; and a "01" represents a relative decrease. All three start bits as a zero, "000," is the normal non-data transfer state and "001" is not used. Additional bits may be used to add more functions or devices. For n starting bits over each of i lines, up to iⁿ⁺¹ -1 function/device combinations are possible.

Figure 15 is a block diagram for a system implementing the start bits indicating both function and destination device. The recovered nibbles are received by the data block reconstruction device 48. Based on the received start bits, the processing device 86 performs the indicated function and the processed block is sent to the indicated destination device 88-92.

As shown in the flow chart of Figure 16, the start bits indicating the function/destination are added to each nibble, (94). The nibbles are sent via the i lines, (96). Using the start bits, the proper function is performed on the data block, the data block is sent to the appropriate destination or both, (98).

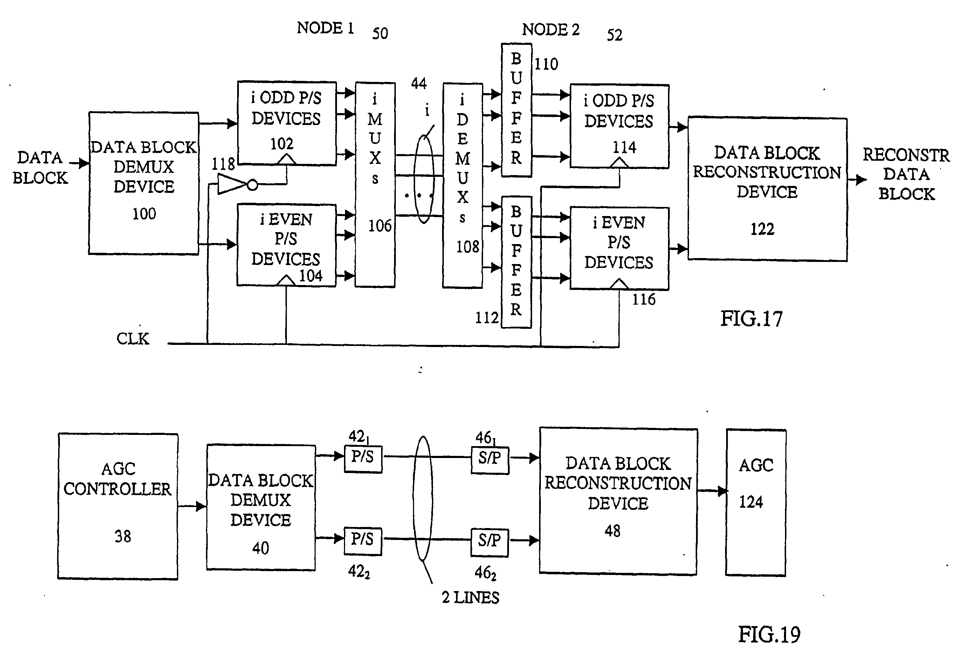

To increase the throughput in a synchronous system, both the positive (even) and negative (odd) edge of the clock are used to transfer block data. One implementation is shown in Figure 17. The data block is received by a data block demultiplexing device 100 and demultiplexed into two (even and odd) sets of i nibbles. Each set of the i nibbles is sent to a respective set of i P/S devices 102, 104. As shown in Figure 17, an odd P/S device set 102, having i P/S devices, has its clock signal inverted by an invertor 118. As a result, the inverted clock signal is half a clock cycle delayed with respect to the system clock. A set of i MUXs 106 select at twice the clock rate between the even P/S device set 104 and the odd P/S device set 102. The resulting data transferred over each connection is at twice the clock rate. At the other end of each connection is a corresponding DEMUX 108. The DEMUXs 108 sequentially couple each line 44 to an even 112 and odd 110 buffer, at twice the clock rate. Each buffer 112, 110 receives a corresponding even and odd bit and holds that value for a full clock cycle. An even 116 and odd 114 set of S/P devices recover the even and odd nibbles. A data block reconstruction device 122 reconstructs the data block from the transferred nibbles.

Figure 18 illustrates the data transfer over a line of a system using the positive and negative clock edge. Even data and odd data to be transferred over line 1 is shown. The hatching indicates the negative clock edge data in the combined signal and no hatching the even. As shown, the data transfer rate is increased by two.

Figure 19 is a preferred implementation of the hybrid parallel/serial interface used between a GC controller 38 and a GC 124. A data block, such as having 16 bits of GC control data (8 bits RX and 8 bits TX), is sent from the GC controller 38 to a data block demultiplexing device 40. The data block is demultiplexed into two nibbles, such as two eight bit nibbles. A start bit is added to each nibble, such as making 9 bits per nibble. The two nibbles are transferred over two lines using two P/S converters 42. The S/P converters 46₂ upon detecting the start bits₂ convert the received nibbles to parallel format. The data block reconstruction device reconstructs the original 16 bits to control the gain of the GC 124. If a function is indicated by the start bits, such as in Figure 11, the AGC 124 performs that function on the received block prior to adjusting the gain.

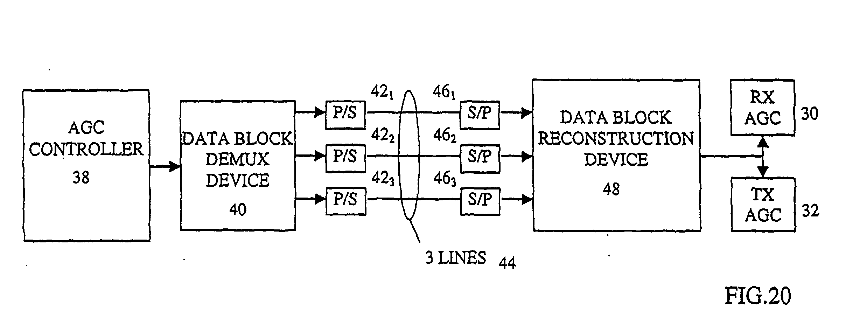

Figure 20 is another preferred implementation for a hybrid parallel/serial converter, using three (3) lines, between a GC controller 38 and an RX GC 30 and TX GC 32. The GC controller 38 sends a data block to the GC 30, 32 with proper RX and TX gain values and start bits, such as per Figure 14. If the start bits per Figure 14 are used, Device 1 is the RX GC 30 and Device 2 is the TX GC 32. The data block demultiplexing device 40 demultiplexes the data block into three nibbles for transfer over the three lines. Using the three P/S converters 42 and three S/P converters 46, the nibbles are transferred serially over the lines and converted into the original nibbles. The data block reconstruction device 48 reconstructs the original data block and performs the function as indicated by the start bits, such as relative increase, relative decrease or absolute value. The resulting data is sent to either the RX or TX GC 30, 32 as indicated by the start bits.

## Claims

1. A base station having a hybrid serial/parallel bus interface system for transferring data from a gain control controller (38) to receive and transmit gain controllers (30, 32), the interface system being **characterized by** comprising:
a data block demultiplexing device (40) for demultiplexing a data block from the gain control controller (38) into m sets of n bits and for adding a start bit to each of the m sets, wherein one start bit of any one of the m sets is provided with a given state so as to indicate start of data block transfer, the m start bits having states collectively representing one of a particular function to be performed or a destination device, wherein the function is one of: a relative increase, a relative decrease and an absolute value function; and wherein the destination is one of: the receive gain controller (30); or the transmit gain controller (32),
for each of the m sets, where m>1, a separate line (44) for transferring that set of the m sets from the gain control controller (38); and
a data block reconstruction device (48) for, when detecting one start bit with a given state on any one of the lines, receiving the m sets over the respective lines, for combining the m sets into the data block and for utilizing the m sets of data in accordance with the m start bits by either performing the function indicated by the combination of the m start bits, or directing the data block to the destination device indicated by the combination of the m start bits.

2. The base station of claim 1 wherein the demultiplexing device, when the interface is not transmitting data, maintains all the separate lines in a zero state.

3. The base station interface of claim 1 wherein the m start bits collectively represent both the particular function to be performed and the destination device.

## Patentansprüche

1. Basisstation mit einem hybriden seriellen/parallelen Busschnittstellensystem zum Transferieren von Daten von einer Verstärkungsregelungssteuerung (38) an Empfangs- und Sendeverstärkungssteuerungen (30, 32), wobei das Schnittstellensystem **dadurch gekennzeichnet ist, daß** es aufweist:
eine Datenblock-Demultiplexvorrichtung (40) zum Demultiplexen eines Datenblocks von der Verstärkungsregelungssteuerung (38) in m Sätze mit n Bits und zum Hinzufügen eines Anfangsbits zu jedem der m Sätze, wobei ein Anfangsbit jedes beliebigen der m Sätze mit einem vorgegebenen Zustand bereitgestellt wird, um den Anfang eines Datenblocktransfers anzuzeigen, wobei die m Anfangsbits Zustände haben, die zusammen eine bestimmte Funktion, die ausgeführt werden soll, oder eine Zielvorrichtung darstellen, wobei die Funktion eine der folgenden ist: eine relative Erhöhung, eine relative Verringerung und eine Absolutwertfunktion und wobei das Ziel eines der folgenden ist: die Empfangsverstärkungssteuerung (30) oder die Sendeverstärkungssteuerung (32);
für jeden der m Sätze, wobei m>1, eine getrennte Leitung (44) zum Transferieren dieses Satzes der m Sätze von der Verstärkungsregelungssteuerung (38); und
eine Datenblock-Rekonstruktionsvorrichtung (48), um, wenn auf einer der Leitungen ein Anfangsbit mit einem gegebenen Zustand erkannt wird, die m Sätze über die jeweiligen Leitungen zu empfangen, um die m Sätze zu dem Datenblock zu kombinieren, und um die m Datensätze gemäß den m Anfangsbits zu nutzen, indem entweder die durch die Kombination der m Anfangsbits angezeigte Funktion ausgeführt wird oder der Datenblock an die durch die Kombination der m Anfangsbits angezeigte Zielvorrichtung geleitet wird.

2. Basisstation nach Anspruch 1, wobei die Demultiplexvorrichtung, wenn die Schnittstelle keine Daten sendet, alle die getrennten Leitungen in einem Nullzustand hält.

3. Basisstationsschnittstelle nach Anspruch 1, wobei die m Anfangsbits gemeinsam sowohl die bestimmte Funktion, die ausgeführt werden soll, als auch die Zielvorrichtung darstellen.

## Revendications

1. Station de base ayant un système d'interface de bus parallèle/série hybride permettant de transférer des données à partir d'un dispositif de commande de commande de gain (38) vers des dispositifs de commande de gain de réception et de transmission (30, 32), le système d'interface étant **caractérisé en ce qu'**il comprend :
un dispositif de démultiplexage de bloc de données (40) permettant de démultiplexer un bloc de données provenant du dispositif de commande de commande de gain (38) en m ensembles de n bits et permettant d'ajouter un bit de départ à chacun des m ensembles, dans lequel un bit de départ de n'importe lequel des m ensembles est doté d'un état donné, de façon à indiquer le départ du transfert du bloc de données, les m bits de départ ayant des états représentant collectivement l'une d'une fonction particulière qui doit être effectuée ou d'un dispositif de destination, dans lequel la fonction est l'une de : une fonction d'augmentation relative, de diminution relative et de valeur absolue, et dans lequel la destination est l'un de : le dispositif de commande de gain de réception (30) ; ou le dispositif de commande de gain de transmission (32) ;
pour chacun des m ensembles, où m > 1, une ligne séparée (44) permettant de transférer cet ensemble des m ensembles à partir du dispositif de commande de commande de gain (38) ; et
un dispositif de restauration de bloc de données (48) permettant, lorsqu'il détecte un bit de départ, doté d'un état donné, sur n'importe laquelle des lignes, de recevoir les m ensembles sur les lignes respectives, afin de combiner les m ensembles en le bloc de données et d'utiliser les m ensembles de données selon les m bits de départ, soit en effectuant la fonction indiquée par la combinaison des m bits de départ, soit en dirigeant le bloc de données vers le dispositif de destination indiqué par la combinaison des m bits de départ.

2. Station de base selon la revendication 1, dans laquelle le dispositif de démultiplexage, lorsque l'interface ne transmet pas de données, maintient toutes les lignes séparées dans un état zéro.

3. Interface de station de base selon la revendication 1, dans laquelle les m bits de départ représentent collectivement à la fois la fonction particulière qui doit être effectuée et le dispositif de destination.
